Europäisches Patentamt

(19) European Patent Office

Office européen des brevets

(11) Veröffentlichungsnummer: **0 093 909**
**B1**

(12) **EUROPÄISCHE PATENTSCHRIFT**

(45) Veröffentlichungstag der Patentschrift:
04.12.85

(51) Int. Cl.⁴: **C 01 B 17/90**, B 05 B 1/06

(21) Anmeldenummer: 83103894.8

(22) Anmeldetag: 21.04.83

(54) Verfahren zur Spaltung von verdünnter Schwefelsäure.

(30) Priorität: 03.05.82 DE 3216420

(43) Veröffentlichungstag der Anmeldung:
16.11.83 Patentblatt 83/46

(45) Bekanntmachung des Hinweises auf die Patenterteilung:
04.12.85 Patentblatt 85/49

(84) Benannte Vertragsstaaten:
BE DE FR GB IT NL

(56) Entgegenhaltungen:
EP - A - 0 071 837
DE - A - 2 415 883
FR - A - 2 216 224
GB - A - 1 120 072
GB - A - 1 272 407

(73) Patentinhaber: BAYER AG, Konzernverwaltung RP
Patentabteilung, D-5090 Leverkusen 1 Bayerwerk (DE)

(72) Erfinder: Dobbers, Jürgen, Dr., Carl-Rumpff-Strasse 51,
D-5090 Leverkusen 1 (DE)
Erfinder: Knieper, Peter, Semmelweisstrasse 121,
D-5000 Köln 80 (DE)
Erfinder: Steinmetz, Klaus, Dr.,
Sebastian-Kneipp-Weg 5, D-4150 Krefeld 1 (DE)
Erfinder: Schweitzer, Martin, Am Köttersbach 4,
D-5068 Odenthal (DE)

## Beschreibung

Die vorliegende Erfindung betrifft ein Verfahren zur Spaltung von gegebenenfalls metallsulfathaltiger, mit organischen Bestandteilen verunreinigter verdünnter Schwefelsäure durch Pyrolyse bei Temperaturen über 1000°C. Die Säure wird bei niedrigen Temperaturen zunächst zerstäubt und anschließend in schon fein verteilter Pyrolyse sowie Oxidation der organischen Verunreinigungen unterworfen.

Bei der Herstellung von Titandioxid nach dem Sulfatverfahren fällt Eisensulfatheptahydrat in großen Mengen an. Dieses sogenannte Grünsalz, welches noch anhaftende Schwefelsäure enthält, wird üblicherweise durch Spaltung in Eisenoxid und Schwefeldioxid aufgearbeitet. Bei der Spaltung von Eisensulfat bzw. der anhaftenden Schwefelsäure wird viel Energie benötigt. Es ist Stand der Technik (vgl. z. B. H. Werth, Nachrichten aus Chemie und Technik, 77, Seite 409, 1959), diese zumindest zum Teil durch Verbrennung von Schwefel oder Kohle zu erzeugen. Ein Anteil der Energie kann in einer Brennkammer in Form von heißen Gasen erzeugt und den zu spaltenden festen Substanzen zugeführt oder zur Vorwärmung der Brennerluft bzw. Dampferzeugung eingesetzt werden.

Zur pyrolytischen Spaltung wäßriger, verunreinigter Schwefelsäuren, die gegebenenfalls noch Metallsulfate und/oder Organika enthalten, werden z. B. Mehrstoffbrenner (vgl. z. B. W. Leuckel, R. Römer, VDI-Berichte, Nr. 286, 1977) eingesetzt, welche die zu pyrolysierenden Substanzen neben Heizmittel und Zerstäubungsmittel in die Brennkammer einspeisen (vgl. z. B. U. Sander, G. Daradimos, Dechema-Monographien, Nr. 1743—1974, 1979, Band 86/I, Seite 234).

Der Ort der Zerstäubung liegt außerhalb des Pyrolyseraumes. Das Säure-Luft-Gemisch wird mittels eines Düsenvorsatzes in die Brennkammer geleitet. Neben dem Vorteil, nicht in der heißen Pyrolysezone direkt die verunreinigte Schwefelsäure zu verstäuben und damit stark erhöhten Korrosionsangriffen ausgesetzt zu sein, hat dieses Zerstäubungssystem den Nachteil, daß Brennkammerschwingungen bei der Zuführung von verstäubter Säure in die Flammenzone angeregt werden können, so daß die Flammenstabilität vermindert und die Pyrolyse unvollständig abläuft.

Bekannt sind bei Düsen symmetrische Störungskörper, die zumindest zwei abhängige Funktionen aufweisen. Wie aus dem AT-A-257 799, 285 791 und 285 013 sowie den DE-A-1 475 154 und 2 645 142 ersichtlich, dienen die Störungskörper in erster Linie zur besseren Zerstäubung durch Aufbau eines Resonanzfeldes. Kennzeichnend für diese Düsen ist die Zerstäubung der Flüssigkeit nach dem Verlassen des Düsenkörpers in einem offenen Raum mit Umgebungsdruck. Aus der DE-C-2 627 880 sind Düsen bekannt, bei denen in einer Kammer Flüssigkeit und Zerstäubergas zum Zwecke einer Mischung zusammengeführt werden. Der große Sprühwinkel wird ohne Störungskörper und nur aufgrund strömungstechnischer Maßnahmen ausströmseitig erreicht. Der Tropfenschwarm ergibt dabei das Sprühbild eines Vollkegels. Gemeinsames Merkmal dieser Düsen ist der nahezu vollständige einstufige Druckabbau am Düsenauslaß.

Überraschenderweise wurde nun gefunden, daß Brennerkammerschwingungen bei der Einbringung von Säure-Luft-Gemischen dann vermindert und mit kleinerer Amplitude auftreten, wenn das Gemisch in Form eines Hohlkegels in die Flamme gegeben und wenn der Flüssigkeitsanteil des Gemisches verringert wird. Den heißen Gasen soll nun so die verunreinigte verdünnte Schwefelsäure zugeführt werden, daß die Zerstäubung geschützt in der Brennkammer erfolgt. Außerdem sollen die Druckschwankungen der Brennkammer keinen Einfluß auf die Zerstäubung hinsichtlich Durchsatz sowie Art und Weise der Einbringung des Säure-Luft-Gemisches in die Flamme haben.

Gegenstand der vorliegenden Erfindung ist daher ein Verfahren zur Spaltung von verdünnter, mit organischen Bestandteilen verunreinigter, gegebenenfalls metallsulfathaltiger Schwefelsäure durch Pyrolyse bei Temperaturen über 1000°C, wobei die Säure bei niedrigen Temperaturen zunächst zerstäubt und anschließend in schon feinverteilter Form der Pyrolyse und Oxidation unterworfen wird und die Zerstäubung der Säure in einer Düse, bestehend aus mehreren Einzelzerstäubungskammern erfolgt und der Tropfenschwarm die Düse in Form eines Hohlkegels verläßt.

Die Zerstäubung der verdünnten, mit Organika verunreinigten, gegebenenfalls noch metallsulfathaltigen Schwefelsäure erfolgt bei niedrigen Temperaturen, d. h. bei Außen- bzw. Betriebstemperaturen, die üblicherweise ca. 50°C nicht übersteigen. Vorteilhafterweise erspart diese Betriebsweise den Bau aufwendiger Einrichtungen zur Kühlung der Düse oder den Einsatz hochwertigen Düsenmaterials. Zur Zerstäubung wird vorzugsweise unter Druck stehende Luft oder auch andere inerte oder brennbare, oxidativ wirkende Gase eingesetzt.

Die im erfindungsgemäßen Verfahren eingesetzte Düse mit innerer Vermischung hat gegenüber den dem Stand der Technik angehörenden Düsen den wesentlichen Vorteil, daß der Tropfenschwarm als Hohlkegel mit geringer Dicke die Düse verläßt, so daß dieser eng begrenzt und vorherbestimmbar in eine als besonders geeignet angesehene Pyrolysezone gebracht werden kann. Um diese Eigenschaften zu erzielen, ist es notwendig, die Zerstäubung der Flüssigkeit nahezu vollständig in der Düse durchzuführen.

Die erfindungsgemäße Zerstäubungskammer ist von einem Schutzrohr umgehen, durch das Schleierluft oder anderes Schleiergas zum Zweck der Führung des in die heiße Brennkammer austretenden kalten Säurehebel-Gas-Gemisches und zur Verhinderung von Korrosion durch Rückströmung im und außerhalb des Schutzrohrendes gegeben wird.

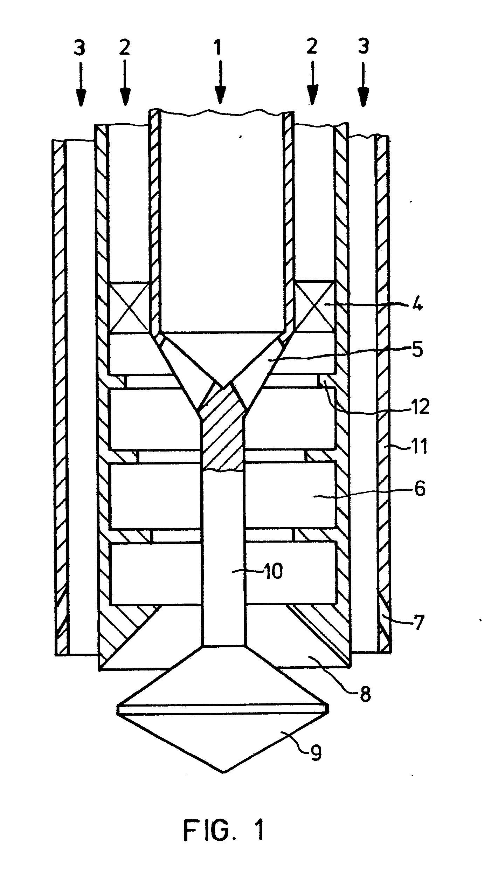

Erfindungsgemäß erfolgt die Zerstäubung in einer Vorrichtung, (s. Fig. 1) deren besondere Merkmale eine Zerstäuberkammer, gebildet von mehreren Einzelkammern 6, und ein Hüllrohr 11 sind. Zwischen Zerstäubungskammer und Hüllrohr wird Luft oder anderes Gas 3 in die Pyrolysekammer geleitet. Die Säure 1 wird der aus mehreren Einzelkammern 6 bestehenden Zerstäuberkammer durch eine oder mehrere große Öffnungen 5 zugeführt und mit Luft oder einem anderen Gas 2, das vorteilhaft über eine Drallvorrichtung 4 oder auf andere Weise gut verteilt der Zerstäuberkammer zugeteilt wird, vermischt.

Durch Stege oder andere, z. B. den Zähnen eines Haifisches ähnliche Einbauten, wird das Säure-Gas-Gemisch einer mehrmaligen Kompression und Entspannung in der Zerstäuberkammer unterworfen. Das Säure-Gas-Gemisch verläßt die Zerstäuberkammer durch einen entsprechend geformten Auslaß und einen zentral angeordneten Störungskörper 9 in Verbindung mit 10, die Düse über einen Ringspalt 8, in einem Winkel, der mindestens 20° größer als der Ausbreitungswinkel bei Freistrahlen von 20° ist. Der Hohlkegelwinkel beträgt 40° bis 120°, bevorzugt 60° bis 90°.

Merkmal dieser Zerstäubung ist, daß das Mengenverhältnis von Zerstäuberluft oder Zerstäubergas 2 zu verstäubter Flüssigkeit 1 sehr gering ist und gleich oder weniger als 0,1 beträgt, während bei anderen Zerstäubungsvorrichtungen, bei denen Luft oder anderes Gas zur Verstäubung benutzt wird, in der Regel für $\ell$ von 0,15 bis 2,0 vorgesehen werden. Die Schleierluft 3 hat die Aufgabe, das Schutzrohr 11 zu kühlen und das Säuretropfen-Gas-Gemisch in die heißen Pyrolysekammer zu führen. Gleichzeitig wird durch die Schleierluft ein Korrosionsangriff auf der Außenseite des Schutzrohres 11 und an der Düse selbst infolge Rückströmung vermieden. Zur Unterstützung dieses Effektes können am Ende des Schutzrohres Bohrungen 7, Schlitze oder ähnliche Durchlässe angebracht werden, so daß ein Teil der Schleierluft zum Auffüllen von Unterdruckgebieten am Ende des Schutzrohres 11 gebraucht wird.

Gegenstand der vorliegenden Erfindung ist ferner eine Vorrichtung zum Zerstäuben von Flüssigkeiten in einer Zerstäuberdüse mit interner Zerstäuberkammer, wobei die Zerstäuberkammer der Düse aus mehreren, durch Stege oder andere Vorrichtungen, die eigehend wirken, getrennten hintereinanderliegenden Einzelkammern besteht, an deren Auslaß ein zentraler, symmetrischer Störungskörper so angeordnet ist, daß in Verbindung mit der Form des Auslasses aus der letzten Zerstäuberkammer ein Sprühstrahl in Form eines Hohlkegels entsteht.

Das vorliegende Verfahren soll durch die folgenden Beispiele noch näher erläutert werden:

### Beispiel 1

Es wird der Druckverlauf am Austritt einer herkömmlichen Düse bei einem Durchsatz von 5,8 m³/h Wasser gezeigt.

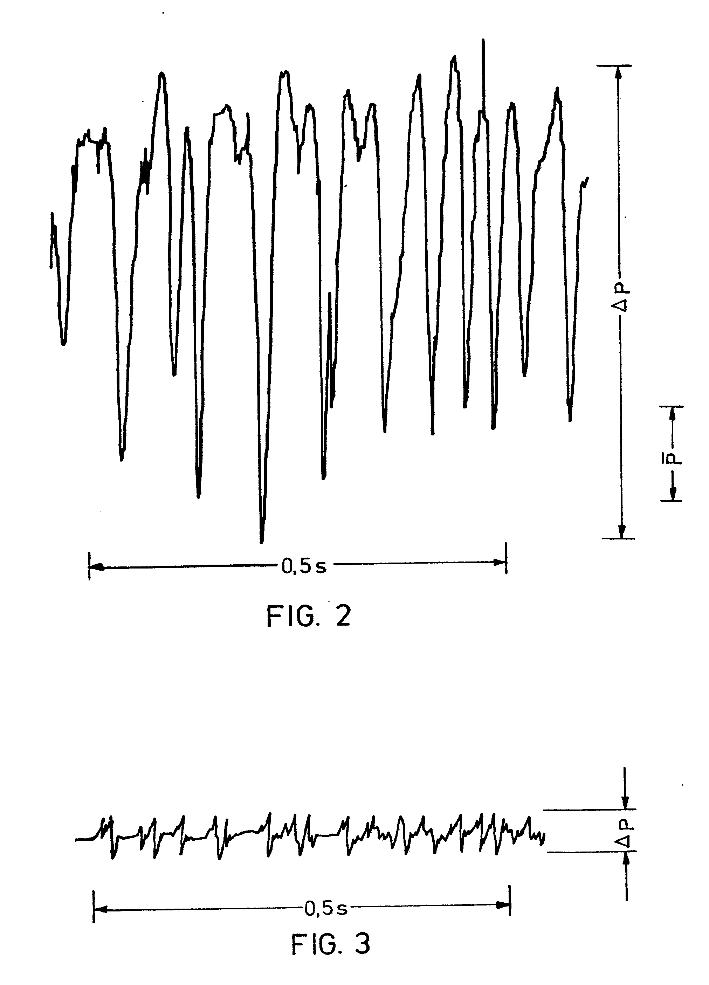

Das Verhältnis von Luftmengen zu Wassermenge beträgt 0,049. Aus der Aufzeichnung des Druckverlaufes Fig. 2 ergibt sich ein Wert von 5,1 des Verhältnisses $\ell$ von maximalem Differenzdruck $\Delta p$ zu mittlerem Druck $\bar{p}$ als Maß der Drucksteifigkeit mit minimaler Frequenz um 12 Hz.

### Beispiel 2

Es wird der Druckverlauf der erfindungsgemäßen Düse bei einem Durchsatz von 5,6 m³/h Wasser und einem Verhältnis $\ell = 0,042$ dargestellt.

Hier liegt die Druckfestigkeit, deren Maximum im Fall von $\ell = 0$ erreicht ist, mit $\ell = 0,05$ bedeutend höher als im Beispiel 1. Ebenso liegt die Minimalfrequenz, die Feuerraum-Schwingungen anregen können, mit 50 Hz bedeutend über der Eigenfrequenz von 2 bis 20 Hz, wie sie üblicherweise in Brennkammern zur Säurepyrolyse vorhanden ist. Der Druckverlauf ist in Fig. 3 dargestellt.

### Patentansprüche

1. Verfahren zur Spaltung von verdünnter, mit organischen Bestandteilen verunreinigter, gegebenenfalls metallsulfathaltiger Schwefelsäure durch Pyrolyse bei Temperaturen über 1000°C, wobei die Säure bei niedrigen Temperaturen zunächst zerstäubt und anschließend in schon feinverteilter Form der Pyrolyse unterworfen wird, dadurch gekennzeichnet, daß die Zerstäubung der Säure in einer Düse, bestehend aus mehreren Einzelzerstäuberkammern, erfolgt und der Tropfenschwarm die Düse in Form eines Hohlkegels verläßt.

2. Verfahren nach Anspruch 1, dadurch gekennzeichnet, daß die Säure bei Temperaturen bis zu ca. 50°C zerstäubt wird.

3. Verfahren nach einem der Ansprüche 1 oder 2, dadurch gekennzeichnet, daß die Zerstäubung mit unter Druck stehender Luft oder anderen Gasen vorgenommen wird.

4. Verfahren nach einem der Ansprüche 1 bis 3, dadurch gekennzeichnet, daß die Einzelzerstäubungskammern von einem Schutzrohr umgeben sind, durch das Schleierluft oder anderes Schleiergas zum Zwecke der Führung des in die heiße Brennkammer austretenden kalten Säurenebel-Gas-Gemisches und zur Verhinderung von Korrosion durch Rückströmung im und außerhalb des Schutzrohrendes gegeben wird.

5. Verfahren gemäß Anspruch 4, dadurch gekennzeichnet, daß die zur Zerstäubung erforderliche Luft- oder Gaseinspeisung symmetrisch in die Einzelzerstäuberkammern erfolgt.

6. Verfahren gemäß einem der Ansprüche 4 oder 5, dadurch gekennzeichnet, daß die zur Zerstäubung erforderliche Luft- oder Gasmenge ≤ 10% der zu zerstäubenden Flüssigkeitsmenge beträgt.

7. Vorrichtung zum Zerstäuben von Flüssigkeiten in einer Zerstäuberdüse mit interner Zerstäuberkammer, dadurch gekennzeichnet, daß die Zerstäuberkammer der Düse aus mehreren, durch Stege oder andere Vorrichtungen, die einengend wirken, getrennten hintereinanderliegenden Einzelkammern besteht, an deren Auslaß ein zentraler, symmetrischer Störungskörper so angeordnet ist, daß in Verbindung mit der Form des Auslasses aus der letzten Zerstäuberkammer ein Sprühstrahl in Form eines Hohlkegels entsteht.

8. Vorrichtung gemäß Anspruch 7, dadurch gekennzeichnet, daß der Störungskörper so angeordnet ist, daß in Verbindung mit der Form des Auslasses ein Hohlkegelwinkel von 40–120°, bevorzugt 60–90° entsteht.

## Claims

1. Process for decomposing dilute sulphuric acid which is contaminated with organic constituents and possibly contains metal sulphate by pyrolysis at temperatures higher than 1000°C, the acid being first atomised at low temperatures and then subjected to pyrolysis in an already finely-divided form, characterised in that the atomisation of the acid is carried out in a nozzle consisting of several individual atomising chambers and the swarm of drops leaves the nozzle in the form of a hollow cone.

2. Process according to Claim 1, characterised in that the acid is atomised at temperatures of up to about 50°C.

3. Process according to one of Claims 1 or 2, characterised in that the atomisation is carried out with compressed air or other gases.

4. Process according to one of Claims 1 to 3, characterised in that the individual atomising chambers are surrounded by a protective tube through which veiling air or another veiling gas is passed for the purpose of directing the cold acid mist/gas mixture emitted into the hot combustion chamber and for preventing corrosion caused by backward flow inside and outside the end of the protective tube.

5. Process according to Claim 4, characterised in that the air or gas necessary for the atomisation is introduced symmetrically into the individual atomising chambers.

6. Process according to one of Claims 4 or 5, characterised in that the quantity of air or gas necessary for the atomisation is ≤ 10% of the quantity of liquid to be atomised.

7. Device for atomising liquids in an atomising nozzle with an internal atomising chamber, characterised in that the atomising chamber of the nozzle consists of several individual chambers which are arranged in succession and separated by ridges or other devices having a narrowing effect, at the outlet of which chambers a central symmetric disturbing element is arranged in such a manner that in conjunction with the shape of the outlet of the last atomising chamber a spray jet in the form of a hollow cone is formed.

8. Device according to Claim 7, characterised in that the disturbing element is arranged in such a manner that in conjunction with the shape of the outlet a hollow cone angle of 40–120°, preferably 60–90° is formed.

## Revendications

1. Procédé de décomposition, par pyrolyse à des températures exédant 1000°C, d'acide sulfurique dilué, contaminé par des composants organiques et renfermant éventuellement un sulfate métallique, l'acide étant tout d'abord atomisé à de basses températures, puis soumis à la pyrolyse sous une forme déjà finement répartie, caractérisé par le fait que l'atomisation de l'acide a lieu dans une buse constituée par plusieurs chambres individuelles d'atomisation, et les gouttes groupées sortent de la buse sous la forme d'un cône creux.

2. Procédé selon la revendication 1, caractérisé par le fait que l'acide est atomisé à des températures atteignant jusqu'à environ 50°C.

3. Procédé selon l'une des revendications 1 ou 2, caractérisé par le fait que l'atomisation a lieu avec de l'air ou d'autres gaz sous pression.

4. Procédé selon l'une des revendications 1 à 3, caractérisé par le fait ques les chambres individuelles d'atomatisation sont entourées d'un tube protecteur dans lequel est délivré de l'air ou un autre gaz formant nappe, en vue de diriger le mélange froid gazbrouillard d'acide refoulé dans la chambre de combustion chaude et d'empêcher la corrosion par reflux à l'intérieur et à l'extérieur de l'extrémité du tube protecteur.

5. Procédé selon la revendication 4, caractérisé par le fait que l'alimentation en air ou en nécessaire à l'atomisation a lieu symmétriquement dans les chambres individuelles d'atomisation.

6. Procédé selon l'une des revendications 4 ou 5, caractérisé par le fait que la quantité d'air ou de gaz nécessaire à l'atomisation représente ≤ 10% de la quantité de liquide devant être atomisée.

7. Dispositif d'atomisation de liquides dans une buse d'atomisation à chambre interne d'atomisation, caractérisé par le fait que la chambre d'atomisation de la buse comprend plusieurs chambres individuelles situées les unes derrière les autres, séparées par des nervures ou autres dispositif à effet d'étranglement, et à la sortie desquelles un corps central et symétrique faisant obstacle occupe une position telle que, par conjugaison avec la forme de la sortie de la dernière chambre d'atomisation, il soit donné naissance à un jet pulvérisé sous la forme d'un cône creux.

8. Dispositif selon la revendication 7, caractérisé par le fait que le corps faisant obstacle occupe une position telle que, par conjugaison avec la forme de la sortie, il soit donné naissance à un angle du cône creux de 40—120°, de préférence 60—90°.

FIG. 1

FIG. 2

FIG. 3